# EUROPÄISCHE PATENTSCHRIFT

(11) **EP 2 104 789 B1**
(45) Veröffentlichungstag und Bekanntmachung des Hinweises auf die Patenterteilung: **18.05.2011**
(21) Anmeldenummer: 07802344.7
(22) Anmeldetag: 18.09.2007
(51) Int. Cl.: F16D 3/58

(54) **DREHELASTISCHE WELLENKUPPLUNG MIT ÜBERBRÜCKBAREM ELASTOMERKÖRPER**
TORSIONALLY ELASTIC SHAFT COUPLING COMPRISING A BRIDGEABLE ELASTOMER MEMBER
ACCOUPLEMENT DE L'ARBRE ÉLASTIQUE À LA TORSION COMPRENANT UN ÉLÉMENT ÉLASTOMÈRE POUVANT ÊTRE PONTÉ

(30) Priorität: 25.09.2006 DE 102006045614
(43) Veröffentlichungstag der Anmeldung: 30.09.2009
(73) Patentinhaber: Hackforth GmbH, 44653 Herne (DE)
(72) Erfinder: MEHLAN, Andreas, 59425 Unna (DE); HEßLING, Christof, 45721 Haltern am See (DE)
(74) Vertreter: Isfort, Olaf
(86) Internationale Anmeldenummer: PCT/EP2007/008078
(87) Internationale Veröffentlichungsnummer: WO 2008/037371

(56) Entgegenhaltungen:
- DE-A1- 10 211 640
- DE-C- 725 651
- DE-U1- 9 401 869
- GB-A- 579 226
- GB-A- 613 404
- US-A- 3 023 593

## Beschreibung

Die vorliegende Erfindung betrifft eine drehelastische Wellenkupplung nach dem Oberbegriff des Anspruch 1.

Bekannt sind derartige Wellenkupplungen aus der US-3023593 und aus der DE 1 167 661 B. DE 1 167 661 B.

Drehelastische Wellenkupplungen werden in Drehmoment übertragenen Antriebssträngen zwischen einem Motor und einer Arbeitsmaschine eingesetzt, um Drehschwingungen innerhalb des Antriebsstranges zu dämpfen. Ein typischer Anwendungsfall ist der Antriebsstrang eines Schiffes zwischen Motor und Schraube. Wellenkupplungen werden mit ihrem Antriebsflansch bzw. mit ihrem Abtriebsflansch an die benachbarten Maschinenelemente angeflanscht, wie beispielsweise an die Schwungscheibe eines Motors oder an eine Welle. Unter Last verdrehen sich Antriebs- und Abtriebsflansch zueinander, so dass die Elastomerkörper elastisch verformt werden. Die Elastomerkörper werden dabei im Wesentlichen in Scherrichtung belastet.

Insbesondere bei Schiffsantrieben werden drehelastische Wellenkupplungen benötigt, die eine progressive Federkennlinie aufweisen. Dies bedeutet, dass der Verdrehwinkel zwischen Antriebs- und Abtriebsflansch mit steigendem Drehmoment zunächst stark wächst, im Bereich des Nennmoments jedoch nur noch schwach zunimmt. Im Bereich des Nennmöments ist die Kupplung demnach deutlich steifer als im Teillastbereich. Diese nicht lineare Federkennlinie wird dazu benötigt, das Dämpfungsverhalten der Kupplung besser auf die zu übertragene Last anzupassen. Im Teillastbereich, wo gerade bei Schiffsantrieben eine hohe Schwingungsanregung zu erwarten ist, wird eine höhere Dämpfung benötigt als im Nennlastbereich.

Eine Wellenkupplung mit nichtlinearer Federkennlinie ist aus der DE 195 37 662 A1 bekannt. Diese Wellenkupplung arbeitet mit unterschiedlich elastischen Elastomerkörpern, die an Laufflächen abrollen und mit steigendem Verdrehwinkel zunehmend komprimiert werden. Der Nachteil dieser Kupplung ist der vergleichsweise große Bauraum und das sich über den Verformungsweg ändernde Massenträgheitsmoment. Durch die starke Gestaltänderung und die Lageänderung der Elastomerkörper unter Last ändert sich die Massenverteilung innerhalb der Kupplung und damit ihr Trägheitsmoment. Dies erschwert die Auslegung des Antriebsstranges hinsichtlich seines Drehschwingungsverhaltens.

Eine aus der DE 197 03 936 A1 bekannte Wellenkupplung baut dagegen kleiner und weist ein nahezu konstantes Massenträgheitsmoment auf. Allerdings ist die Federkennlinie dieser Kupplung nahezu linear.

Aus der eingangs zitierten DE 1 167 661 B sind verschiedene, gattungsgleiche Wellenkupplungen bekannt, bei denen die Kraftübertragung von dem Antriebsflansch auf den Abtriebsflansch über zwei über ein Zwischenglied hintereinander geschaltete Elastomerkörper erfolgt. Die Federsteifigkeit des ersten Elastomerkörpers ist dabei geringer als die des zweiten Elastomerkörpers. Der Drehwinkel zwischen dem Zwischenglied und dem Antriebsflansch ist durch einen elastischen Anschlag begrenzt. Dies hat zur Folge, dass bei geringen Antriebsmomenten eine voll wirksame Schwingungsdämpfung durch den weicheren Elastomerkörper erfolgt. Bei großen Antriebsmomenten wird diese durch den Anschlag überbrückt und dadurch eine Überbeanspruchung vermieden. Es wirkt dann aber der härtere, zweite Elastomerkörper, sodass auch bei großen Antriebsmomenten die elastische Nachgiebigkeit gegen Verdrehen in vollem Umfang gewahrt bleibt. Bei den gezeigten Kupplungen umgibt der erste, weichere Elastomerkörper stets den zweiten, härteren. Der Kraftfluss ist deswegen annähernd radial. Nachteilig bei diesen Kupplungen ist ihr großer Bauraum.

Der vorliegenden Erfindung liegt die Aufgabe zugrunde, eine elastische Wellenkupplung mit nichtlinearer Federkennlinie anzugeben, die sich durch einen kompakten Aufbau und ein nahezu konstantes Massenträgheitsmoment auszeichnet. Eine Wellenkupplung der eingangs genannten Gattung ist somit unter Beibehaltung ihrer positiven Eigenschaften so weiterzubilden, dass sie besonders kompakt baut.

Gelöst wird diese Aufgabe dadurch, dass bei einer Wellenkupplung der eingangs genannten Gattung der zweite (harte) Elastomerkörper um den ersten (weichen) Elastomerkörper angeordnet wird.

Durch die gegenüber dem eingangs genannten Stand der Technik vertauschte Anordnung der Elastomerkörper verläuft der Kraftfluss innerhalb der Kupplung nicht durchwegs radial, sondern schleifenförmig verschwenkt. Durch das Verschwenken des Kraftflusses wird der radiale Bauraum der Kupplung, also ihr Durchmesser, signifikant verkleinert.

Eine weitere Grundidee der vorliegenden Erfindung besteht darin, den ersten Elastomerkörper nur im Teillastbereich zu beanspruchen und bei Erreichen eines bestimmten Grenzmoments - das über die Federsteifigkeiten mit einem entsprechenden Grenztorsionswinkel verknüpft ist - den ersten Elastomerkörper mit Hilfe des starren Anschlags zu überbrücken. Die Folge ist, dass unterhalb des Grenzmoments beide Elastomerkörper belastet werden, wodurch eine hohe Elastizität erzielt wird. Beim Erreichen des Anschlages wird der erste Elastomerkörper nicht weiter verformt, so dass mit steigendem Drehmoment nur noch der zweite Elastomerkörper eine dämpfende Wirkung entfaltet. Aus dem Umstand, dass die Federsteifigkeit des ersten Elastomerkörpers kleiner ist als die des zweiten, resultiert die progressive Federkennlinie der Gesamtkupplung.

Ein großer Vorteil dieser Kupplung besteht darin, dass ihre Elastomerkörper ortsfest sind und sich ihre Gestalt nicht so stark verändert. Folglich bleibt das Massenträgheitsmoment der Kupplung über den Torsionsweg nahezu konstant.

In welchem Verhältnis die einzelnen Federkonstanten genau stehen und bei welchem Torsionswinkel der Anschlag erreicht ist, ergibt sich aus den Randbedingungen, welche die übrigen Organe des Antriebsstrangs vorgeben. Eine allgemein gültige Dimensionierungsanweisung ist insoweit nicht möglich. Allerdings hat es sich als vorteilhaft erwiesen, dass spätestens bei Nenndrehmoment der starre Anschlag erreicht und damit der weichere erste Elastomerkörper überbrückt ist. Wenn der starre Anschlag schon unterhalb des Nenndrehmoments erreicht ist, ist sichergestellt, dass die Kupplung Lastschwankungen im Betrieb allein durch den zweiten Elastomerkörper ausgleicht. Die Laufruhe wird dadurch verbessert.

Der Übergang von zwei auf einen elastischen Elastomerkörper bei Erreichen des Anschlags kann dadurch abgemildert werden, dass der starre Anschlag mit einer elastischen Auflage gedämpft wird. Die elastische Auflage dient somit quasi als dritter Elastomerkörper, der im Übergangsbereich mit dem ersten Elastomerkörper parallel geschaltet wird. Sobald der erste Elastomerkörper überbrückt ist, ist die elastische Auflage mit dem zweiten Elastomerkörper parallel geschaltet.

Eine ringförmige Gestalt der elastischen Elastomerkörper erlaubt einerseits einen kompakten Aufbau der Kupplung und bewirkt andererseits für ein konstantes Massenträgheitsmoment.

Beides wird dadurch weiter optimiert, dass die Elastomerkörper konzentrisch zueinander angeordnet werden. Dies erfolgt vorzugsweise so, dass der zweite Elastomerkörper den ersten Elastomerkörper umgibt.

Der starre Anschlag sollte zumindest außerhalb des ersten Elastomerkörpers vorgesehen werden, so dass die dort abzustützende Kraft nicht allzu groß ist. Außerhalb des ersten Elastomerkörpers bedeutet, dass der Anschlag auf einen größeren Radius zur Mittelachse der Wellenkupplung liegt als die äußere Peripherie des ersten Elastomerkörpers.

Um die Kraft am Anschlag weiter zu senken, sollte dieser sogar außerhalb des zweiten Elastomerkörpers angeordnet sein. Dies ist insbesondere dann vorteilhaft, wenn eine elastische Auflage am Anschlag vorgesehen wird. Durch die geringe Kraft kann diese vergleichsweise leicht ausgeführt werden.

Um die Wellenkupplung auch in Axialrichtung kompakt aufzubauen, empfiehlt es sich, den ersten Elastomerkörper so anzuordnen, dass er sich axial innerhalb des zweiten Elastomerkörpers erstreckt. Damit liegt er axial und radial innerhalb des zweiten Elastomerkörper-Rings.

Selbstverständlich müssen die jeweiligen Elastomerkörper nicht zwangsläufig einstückig sein. Im Interesse der Kühlluftführung ist es vorteilhaft, einen Elastomerkörper aus mehreren (beabstandeten) Segmenten zusammenzusetzen. Die einzelnen Segmente sind dann zueinander parallel geschaltet und bilden in ihrer Gesamtheit den Elastomerkörper.

Als Werkstoff für die Elastomerkörper eignet sich Gummi oder Silikon.

Das Zwischenglied kann auch aus mehreren Teilen zusammengesetzt sein. So ist es zur Erleichterung der Montage vorteilhaft, das Zwischenglied zweiteilig auszuführen und jeden Elastomerkörper an einem Teil zu befestigen.

Wellenkupplungen der hier beschriebenen Art funktionieren drehrichtungs- und belastungsrichtungsunabhängig. Wenn der Drehmomentfluss umgekehrt durch die Kupplung geführt wird, werden Antriebsflansch und Abtriebsflansch quasi vertauscht. Folglich ist die Federsteifigkeit des ersten Elastomerkörpers nach der hier verwendeten Terminologie nun größer anzunehmen als die des zweiten. Konsequenterweise muss der Anschlag dann auch zwischen Zwischenglied und Abtriebsflansch vorgesehen sein, damit der Elastomerkörper mit der geringeren Federsteifigkeit überbrückbar ist. Eine bauliche Änderung an der Kupplung geht damit freilich nicht einher; es ergibt sich lediglich eine andere Benennung der Bauteile. Die Drehmomentflussrichtung ist ohnehin lediglich eine Frage der Betrachtungsweise, da nach dem mechanischem Grundprinzip das Drehmoment ebenso vom Motor zu Arbeitsmaschine fließt wie umgehrt.

Die vorliegende Erfindung soll nun anhand von vier Ausführungsbeispielen erläutert werden. Hierfür zeigen:
- Figur 1:: erste Ausführungsform im Längsschnitt;
- Figur 2:: Anschlag der ersten Ausführungsform im Querschnitt entlang der Linie A-A;
- Figur 3:: zweite Ausführungsform, längs geschnit- ten, perspektivisch;
- Figur 4:: dritte Ausführungsform im Längsschnitt;
- Figur 5:: Anschlag der dritten Ausführungsform im Querschnitt entlang der Linie B-B,
- Figur 6:: Vierte Ausführungsform der Erfindung.

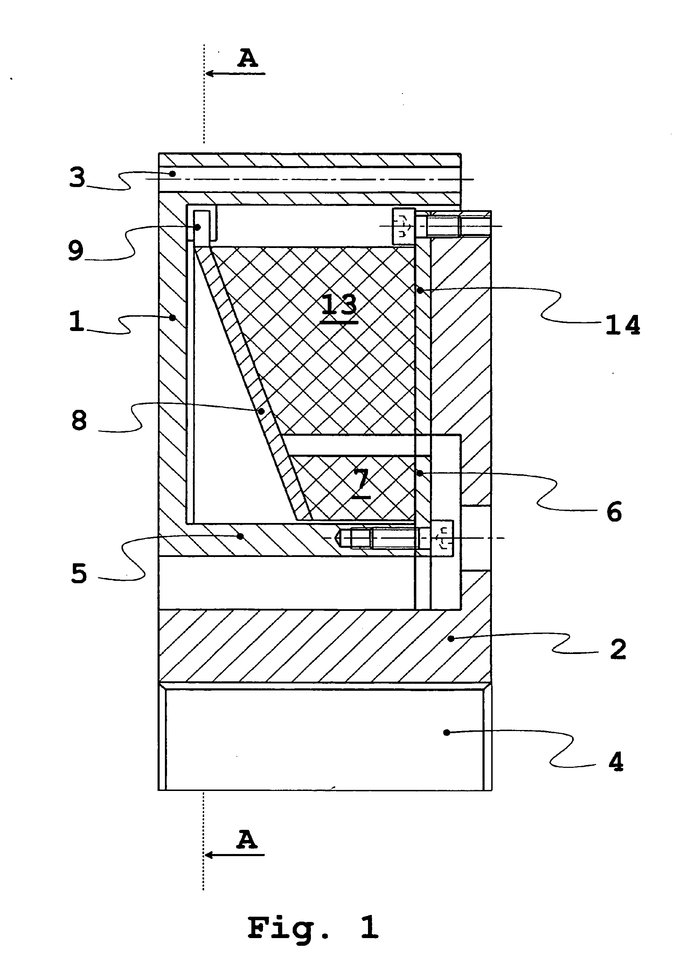

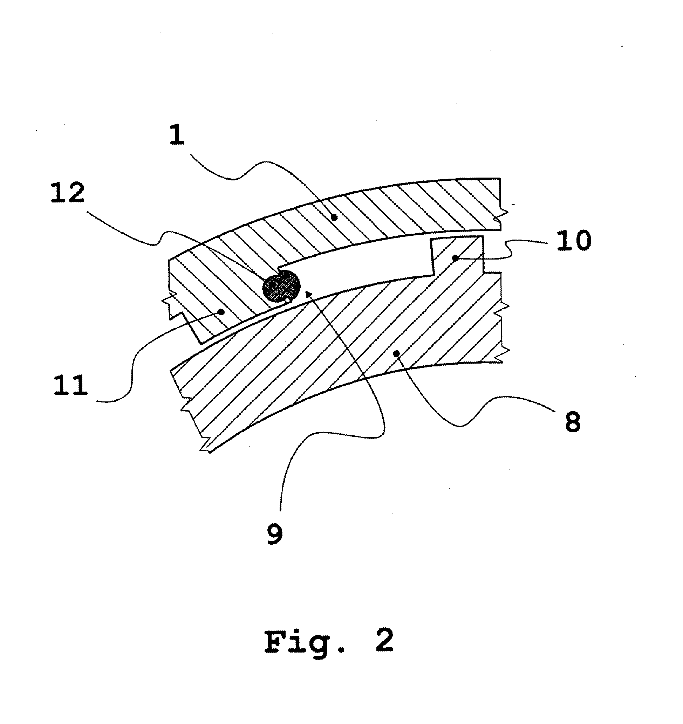

Die drehelastische Wellenkupplung verfügt stets über einen Antriebsflansch 1 und über einen Abtriebsflansch 2, über die die Wellenkupplung mit den benachbarten Maschinenelementen des Antriebsstrangs verbunden wird. Hierfür weist der Antriebsflansch 1 in dem in den Figuren 1 und 2 dargestellten ersten Ausführungsbeispiel einen Lochkreis 3 auf, über den er beispielsweise an die Schwungscheibe eines Motors angeschraubt wird. Der Abtriebsflansch 2 ist dagegen als Nabe ausgeführt und umfasst einen entsprechenden Wellensitz 4, über den er mit einer Welle verbindbar ist.

Das über den Lochkreis 3 in den Antriebsflansch 1 hinein fließende Drehmoment wird nach innen zu einem Kragen 5 des Antriebsflansches 1 geführt und von dort auf eine Anschlussscheibe 6 übertragen. Die Anschlussscheibe 6 ist mit dem Kragen 5 drehfest verschraubt und folglich in Torsionsrichtung gesehen ein Bestandteil des Antriebsflansches 1. Es ist allerdings denkbar, die Anschlussscheibe 6 in Axialrichtung biegeelastisch auszuführen, damit die Wellenkupplung einen Axialversatz ausgleichen kann. Das Axialspiel zwischen Antriebs- und Abtriebsflansch kann dann durch einen Sicherungsring begrenzt werden.

Auf die Anschlussscheibe 6 ist ein erster ringförmiger, elastischer Elastomerkörper 7 aus Gummi aufvulkanisiert. Mit seiner gegenüberliegenden Flanke ist der erste Elastomerkörper 7 auf ein Zwischenglied 8 aufvulkanisiert. Unter Scherverformung des ersten Elastomerkörpers 7 ist das Zwischenglied 8 relativ zum Antriebsflansch 1 verdrehbar.

Der Torsionswinkel zwischen Zwischenglied 8 und Antriebsflansch 1 ist allerdings durch einen starren Anschlag 9 begrenzt. Dieser wird seitens des Zwischengliedes 8 durch mindestens einen radial über den Umfang des Zwischenglieds 8 hervorstehenden Vorsprung 10 gebildet, der gegen einen korrespondierenden, am Antriebsflansch 1 radial nach innen hervorstehenden Vorsprung 11 anläuft. Die beiden Vorsprünge sind nur in dem in Figur 2 dargestellten Querschnitt mit Bezugszeichen versehen. Nur dort ist auch eine im Vorsprung 11 des Antriebsflansch 1 angeordnete elastische Auflage 12 zu erkennen, die das Auflaufen der Vorsprünge 10, 11 dämpft. Über den Umfang sind mehrere Vorsprungspaarungen vorgesehen, die gleichzeitig anschlagen.

Vor und auch nach Erreichen des Anschlags 9 wird das Drehmoment von dem Zwischenglied 8 weiter über einen zweiten elastischen Elastomerkörper 13 in Richtung des Abtriebsflansch 2 übertragen. Der zweite Elastomerkörper 13 besteht ebenfalls aus Gummi ist mit seiner einen Flanke auf das Zwischenglied 8 und mit seiner anderen Flanke auf eine zweite Anschlussscheibe 14 aufvulkanisiert, letztere ist ihrerseits mit dem Abtriebsflansch 2 fest verschraubt. Die Anschlussscheibe 14 dient lediglich der Montagevereinfachung.

Die in den Figuren 1 und 2 dargestellte Ausführungsform zeichnet sich durch einen besonderen kompakten Aufbau aus, der durch die axial und radial ineinander liegenden, ringförmigen Elastomerkörper 7, 13 bedingt ist: Der Kraftfluss verläuft nämlich schleifenförmig verschwenkt vom äußeren Lochkreis 3 nach innen zum Kragen 5 und danach über den ersten Elastomerkörper 7, das Zwischenglied 8 und den zweiten Elastomerkörper 13 zurück nach außen. Dort angekommen, kehrt der Kraftfluss abermals um und läuft über die Anschlussscheibe 14 und Abtriebsflansch 2 erneut nach innen Richtung Wellensitz 4.

Die höhere Federsteifigkeit des zweiten Elastomerkörpers 13 wird durch seine größere Gummimasse erreicht. Alternativ könnten unterschiedliche Gummiwerkstoffe oder einerseits Gummi und anderseits Silikon vorgesehen werden.

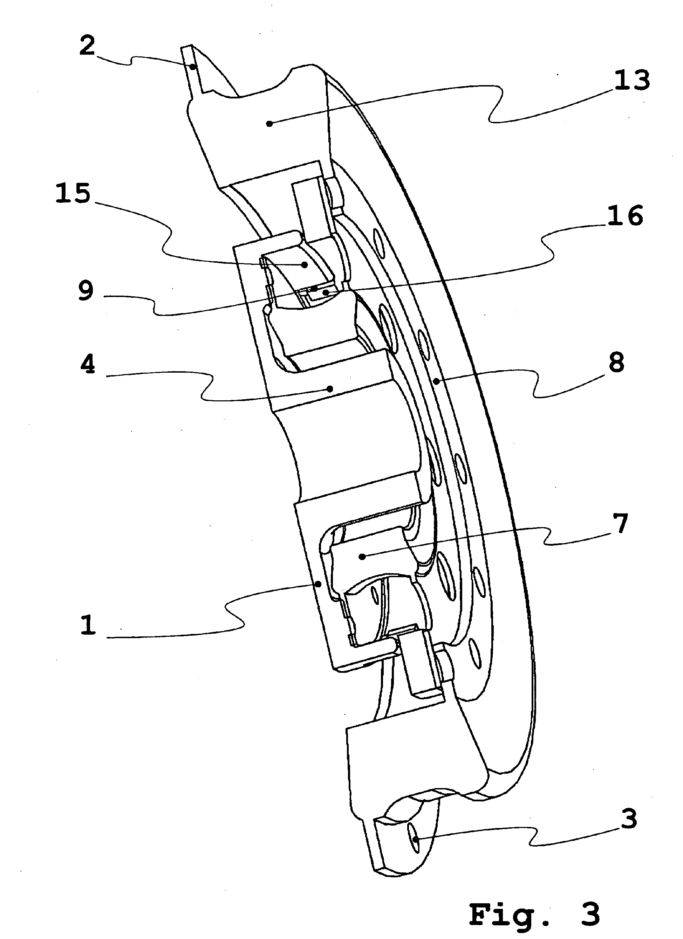

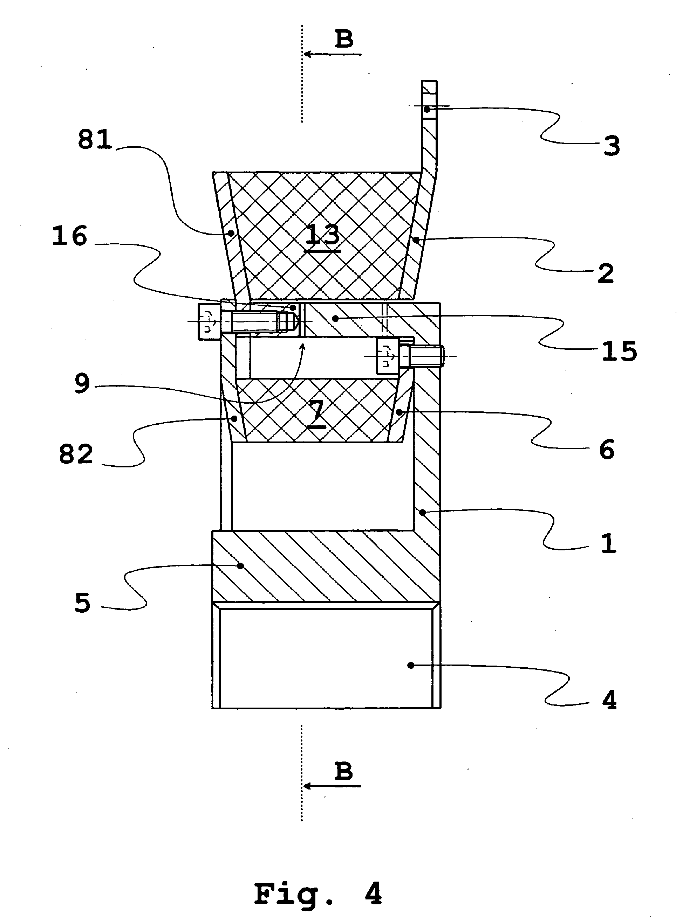

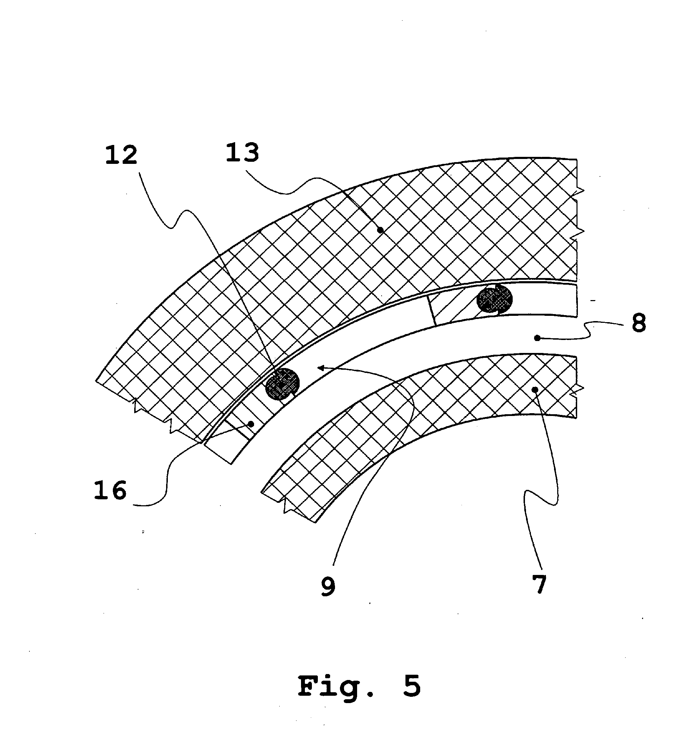

In Figur 3 ist eine zweite Ausführungsform der erfindungsgemäßen Wellenkupplung dargestellt. Eine konstruktive, aber nicht prinzipielle Abwandlung derselben zeigen die den Figuren 4 bis 6.

Die in den Figuren 3 bis 5 gezeigten Ausführungsformen unterscheiden sich von der vorerörterten Ausführungsform aus den Figuren 1 und 2 prinzipiell dadurch, dass der Anschlag 9 zwischen den beiden Elastomerkörpern 7, 13 angeordnet ist. Auch wird der Anschlag 9 nicht durch radial ineinander greifende Vorsprünge, sondern durch eine Mehrzahl von sich in axialer Richtung erstreckender, sich in Umfangsrichtung hinterschneidenden Klauen 15, 16 gebildet. Schließlich liegt der Antriebsflansch 1 im Wesentlichen innerhalb des Abtriebsflansches 2. Der Wellensitz 4 befindet sich hier antriebsseitig am Antriebsflansch 1; der Abtriebsflansch 2 ist mit dem Lochkreis 3 versehen. Das Zwischenglied 8 ist hier zweiteilig ausgeführt. Der erste Elastomerkörper 7 ist auf den ersten Teil 81 des Zwischenglieds 8 aufvulkanisiert, der zweite Elastomerkörper 13 auf dem zweitem Teil 81. Beide Teile 81, 82 des Zwischenglieds sind miteinander verschraubt.

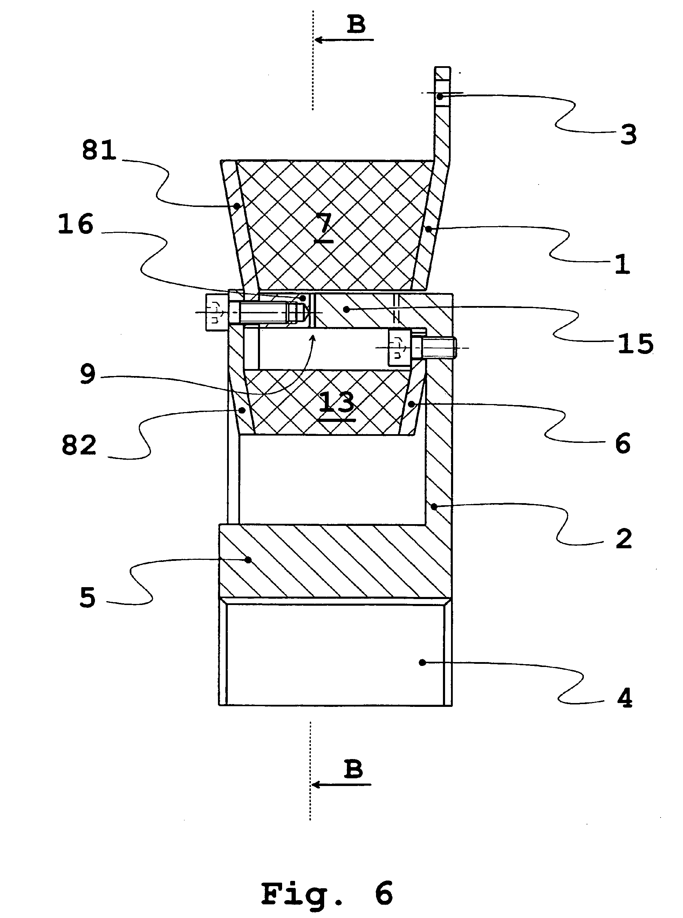

Die dargestellten Kupplungen können erfindungsgemäß auch mit umgekehrten Drehmomentfluss verwendet werden. Daraus folgt, dass ohne Gestaltänderung Antriebs- und Abtriebsflansch sowie die Elastomerkörper funktional vertauscht werden, der Anschlag findet sich dann zwischen Zwischenglied und Abtriebsflansch. Figur 6 zeigt die identische Wellenkupplung aus Figur 4, jedoch bei umgekehrtem Drehmomentfluss von dem Lochkreis 3 auf den Wellensitz 4. Hierdurch ändern sich die funktionalen Bezeichnungen der Bauteile, was sich ausschließlich in einer Vertauschung der Bezugsziffern niederschlägt.

## Patentansprüche

1. Drehelastische Wellenkupplung
a) mit einem Antriebsflansch (1) und mit einem Abtriebsflansch (2), jeweils zum Verbinden der Wellenkupplung mit benachbarten Maschinenelementen,
b) mit zwei in Reihe geschalteten, elastischen Elastomerkörpern (7, 13),
c) und mit einem Zwischenglied (8), das über den ersten Elastomerkörper (7) mit dem Antriebsflansch (1) und über den zweiten Elastomerkörper (13) mit dem Abtriebsflansch (2) verbunden ist,
d) dergestalt, dass das Drehmoment von dem Antriebsflansch (1) über den ersten Elastomerkörper (7) auf das Zwischenglied (8) und von dort über den zweiten Elastomerkörper (13) auf den Abtriebsflansch (2) übertragbar ist,
e) wobei die Federsteifigkeit des ersten Elastomerkörpers (7) kleiner ist als die Federsteifigkeit des zweiten Elastomerkörpers (13),
f) wobei der Torsionswinkel zwischen Antriebsflansch (1) und Zwischenglied (8) durch einen starren Anschlag (9) begrenzt ist,
g) wobei die elastischen Elastomerkörper (7, 13) im Wesentlichen ringförmig ausgebildet sind,
h) und wobei die elastischen Elastomerkörper (7, 13) konzentrisch angeordnet sind,
i) wobei der zweite Elastomerkörper (13) den ersten Elastomerkörper (7) umgibt,
**dadurch gekennzeichnet, dass** der starre Anschlag (9) radial außerhalb des ersten Elastomerkörpers (7) und radial außerhalb des zweiten Elastomerkörpers (13) angeordnet ist.

2. Drehelastische Wellenkupplung
a) mit einem Antriebsflansch (1) und mit einem Abtriebsflansch (2), jeweils zum Verbinden der Wellenkupplung mit benachbarten Maschinenelementen,
b) mit zwei in Reihe geschalteten, elastischen Elastomerkörpern (7, 13),
c) und mit einem Zwischenglied (8), das über den ersten Elastomerkörper (7) mit dem Antriebsflansch (1) und über den zweiten Elastomerkörper (13) mit dem Abtriebsflansch (2) verbunden ist,
d) dergestalt, dass das Drehmoment von dem Antriebsflansch (1) über den ersten Elastomerkörper (7) auf das Zwischenglied (8) und von dort über den zweiten Elastomerkörper (13) auf den Abtriebsflansch (2) übertragbar ist,
e) wobei die Federsteifigkeit des ersten Elastomerkörpers (7) größer ist als die Federsteifigkeit des zweiten Elastomerkörpers (13),
f) wobei der Torsionswinkel zwischen Abtriebsflansch (2) und Zwischenglied (8) durch einen starren Anschlag (9) begrenzt ist,
g) wobei die elastischen Elastomerkörper (7, 13) im Wesentlichen ringförmig ausgebildet sind,
h) und wobei die elastischen Elastomerkörper (7, 13) konzentrisch angeordnet sind,
i) wobei der erste Elastomerkörper (7) den zweiten Elastomerkörper (13) umgibt,
**dadurch gekennzeichnet, dass** der starre Anschlag (9) radial außerhalb des ersten Elastomerkörpers (7) und radial außerhalb des zweiten Elastomerkörpers (13) angeordnet ist.

3. Wellenkupplung nach einem der vorhergehenden Ansprüche, **dadurch gekennzeichnet, dass** das Zwischenglied (8) zweiteilig ausgeführt ist, und dass die Elastomerkörper (7, 13) jeweils an einem Teil (81, 82) des Zwischenglieds (8) angebracht sind.

## Claims

1. Torsionally elastic shaft coupling
a) having a drive flange (1) and a power take-off flange (2), for connecting the shaft coupling with adjacent machine elements, in each case,
b) having two elastic elastomer bodies (7, 13) switched in series,
c) and having an intermediate member (8) that is connected with the drive flange (1) by way of the first elastomer body (7) and with the power take-off flange (2) by way of the second elastomer body (13),
d) in such a manner that the torque can be transferred from the drive flange (1) to the intermediate member (8) by way of the first elastomer body (7), and from there, to the power take-off flange (2) by way of the second elastomer body (13),
e) whereby the spring stiffness of the first elastomer body (7) is less than the spring stiffness of the second elastomer body (13),
f) whereby the torsion angle between drive flange (1) and intermediate member (8) is limited by a rigid stop (9),
g) whereby the elastic elastomer bodies (7, 13) are configured essentially in ring shape,
h) and whereby the elastic elastomer bodies (7, 13) are disposed concentrically, ,
i) whereby the second elastomer body (13) surrounds the first elastomer body (7),
**characterized in that** the rigid stop (9) is disposed radially outside of the first elastomer body (7) and radially outside of the second elastomer body (13).

2. Torsionally elastic shaft coupling
a) having a drive flange (1) and a power take-off flange (2), for connecting the shaft coupling with adjacent machine elements, in each case,
b) having two elastic elastomer bodies (7, 13) switched in series,
c) and having an intermediate member (8) that is connected with the drive flange (1) by way of the first elastomer body (7) and with the power take-off flange (2) by way of the second elastomer body (13),
d) in such a manner that the torque can be transferred from the drive flange (1) to the intermediate member (8) by way of the first elastomer body (7), and from there, to the power take-off flange (2) by way of the second elastomer body (13),
e) whereby the spring stiffness of the first elastomer body (7) is greater than the spring stiffness of the second elastomer body (13),
f) whereby the torsion angle between power take-off flange (2) and intermediate member (8) is limited by a rigid stop (9),
g) whereby the elastic elastomer bodies (7, 13) are configured essentially in ring shape,
h) and whereby the elastic elastomer bodies (7, 13) are disposed concentrically,
i) whereby the first elastomer body (7) surrounds the second elastomer body (13),
**characterized in that** the rigid stop (9) is disposed radially outside of the first elastomer body (7) and radially outside of the second elastomer body (13).

3. Shaft coupling according to one of the preceding claims, **characterized in that** the intermediate member (8) is structured in two parts, and that the elastomer bodies (7, 13) are each affixed to one part (81, 82) of the intermediate member (8).

## Revendications

1. Accouplement d'arbre élastique en rotation
a) avec une bride menante (1) et avec une bride menée (2), respectivement pour relier l'accouplement d'arbre à des éléments de machine avoisinants,
b) avec deux corps élastomères élastiques (7, 13) montés en série
c) et avec un organe intermédiaire (8) qui est relié par le premier corps élastomère (7) à la bride menante (1) et par le deuxième corps élastomère (13) à la bride menée (2),
d) de telle sorte que le couple de rotation de la bride menante (1) peut être transféré par le premier corps élastomère (7) à l'organe intermédiaire (8) et de là par le deuxième corps élastomère (13) à la bride menée (2),
e) où la rigidité résiliante du premier corps élastomère (7) est plus petite que la rigidité résiliante du deuxième corps élastomère (13),
f) où l'angle de torsion entre la bride menante (1) et l'organe intermédiaire (8) est limité par une butée rigide (9),
g) où les corps élastomères élastiques (7, 13) sont réalisés en une forme sensiblement annulaire,
h) et où les corps élastomères élastiques (7, 13) sont disposés concentriquement,
i) où le deuxième corps élastomère (13) entoure le premier corps élastomère (7),
**caractérisé en ce que** la butée rigide (9) est disposée radialement à l'extérieur du premier corps élastomère (7) et radialement à l'extérieur du deuxième corps élastomère (13).

2. Accouplement d'arbre élastique en rotation
a) avec une bride menante (1) et avec une bride menée (2), respectivement pour relier l'accouplement d'arbre à des éléments de machine avoisinants,
b) avec deux corps élastomères élastiques (7, 13) montés en série,
c) et avec un organe intermédiaire (8) qui est relié par le premier corps élastomère (7) à la bride menante (1) et par le deuxième corps élastomère (13) à la bride menée (2),
d) de telle sorte que le couple de rotation peut être transféré de la bride menante (1) par le premier corps élastomère (7) à l'organe intermédiaire (8) et de là par le deuxième corps élastomère (13) à la bride menée (2),
e) où la rigidité résiliante du premier corps élastomère (7) est plus grande que la rigidité résiliante du deuxième corps élastomère (13),
f) où l'angle de torsion entre la bride menée (2) et l'organe intermédiaire (8) est délimité par une butée rigide (9),
g) où les corps élastomères élastiques (7, 13) sont réalisés sensiblement en une forme annulaire,
h) et où les corps élastomères élastiques (7, 13) sont disposés concentriquement,
i) où le premier corps élastomère (7) entoure le deuxième corps élastomère (13),
**caractérisé en ce que** la butée rigide (9) est disposée radialement à l'extérieur du premier corps élastomère (7) et radialement à l'extérieur du deuxième corps élastomère (13).

3. Accouplement d'arbre selon l'une des revendications précédentes, **caractérisé en ce que** l'organe intermédiaire (8) est réalisé en deux parties, et **en ce que** les corps élastomères (7, 13) sont disposés respectivement à une partie (81, 82) de l'organe intermédiaire (8).
